# EUROPÄISCHE PATENTSCHRIFT

(11) **EP 0 912 835 B1**
(45) Veröffentlichungstag und Bekanntmachung des Hinweises auf die Patenterteilung: **19.01.2005**
(21) Anmeldenummer: 98933468.5
(22) Anmeldetag: 07.05.1998
(51) Int. Cl.: F16C 11/06

(54) **RADIALKUGELGELENK FÜR EIN KRAFTFAHRZEUG**
RADIAL BALL-AND-SOCKET JOINT FOR A MOTOR VEHICLE
JOINT SPHERIQUE RADIAL POUR VEHICULE

(30) Priorität: 09.05.1997 DE 29708162 U
(43) Veröffentlichungstag der Anmeldung: 06.05.1999
(73) Patentinhaber: ZF Lemförder Metallwaren AG, 49448 Lemförde (DE)
(72) Erfinder: WESTPHAL, Paul, D-32351 Stemwede (DE)
(86) Internationale Anmeldenummer: PCT/DE1998/001268
(87) Internationale Veröffentlichungsnummer: WO 1998/051935

(56) Entgegenhaltungen:
- EP-A- 0 638 735
- DE-A- 4 401 639
- DE-U- 29 509 566
- GB-A- 2 053 342
- US-A- 2 424 431
- US-A- 2 553 743
- US-A- 3 410 587

## Beschreibung

Die Erfindung betrifft ein Radialkugelgelenk für ein Kraftfahrzeug nach dem Oberbegriff des Patentanspruches 1 bzw. 2.

Bekannt sind Kugelgelenke für unterschiedliche Anwendungsfälle. Während bei Axialkugelgelenken die Hauptbelastung überwiegend bezogen auf den nicht ausgelenkten Kugelzapfen in axialer Richtung erfolgt, ist ein Radialkugelgelenk für überwiegend radiale Belastung ausgelegt. Somit unterscheiden sich derartige Gelenke in ihrer Funktion und teilweise im Aufbau.

Ein gattungsgemäßes Kugelgelenk ist in der US 3,410,587 offenbart. Die darin beschriebene Ausführung weist ein Gehäuse und einen Kugelzapfen auf, dessen Gelenkkugel allseitig beweglich in einer Lagerschale gelagert ist, wobei die Lagerschale einteilig ausgeführt ist und wenigstens ein Dämpfungselement die Gelenkkugel des Kugelzapfens radial progressiv vorspannt. Dieses Dämpfungselement wird in die Lagerschale eingesetzt und verfügt über eine verglichen mit der Lagerschale geringere Shorehärte.

Darüber hinaus beschreibt die EP 0 638 735 A1 ein Axialkugelgelenk, dessen Lagerschale im an der Gelenkkugel des Kugelzapfens nur punktuell oder linear anliegt.

Aus DE 295 09 566 ist ferner ein Axialkugelgelenk bekannt, das aus einem einseitig offenen, metallischen Gehäuse besteht, in dem ein Kugelzapfen in einer Lagerschale gelagert ist, die durch Materialverformung des offenen Gehäuserandes in dem Gehäuse gehalten ist. Die Lagerschale besteht aus Kunststoff und stützt sich an der Gehäuseseite, an der außen ein Befestigungszapfen angeformt ist, mit einer Schrägfläche gegen eine komplementäre Schrägfläche am Gehäuse und gegen einen zwischen der Lagerschale und einer an dem Gehäuse ausgebildeten, radialen Stützfläche eingelegten Puffer ab. Dieser Puffer kann dabei aus einem Gummiring ausgewählter elastischer Materialsteifigkeit bestehen. Dadurch soll ein Spielausgleich zwischen der Lagerschale und dem Gelenkgehäuse erreicht werden.

Aus DE 44 01 639 A1 ist darüber hinaus ein Traggelenk bekannt, bei dem die Gelenkkugel des Kugelzapfens in einer Lagerschale gelagert ist. Um eine progressive Vorspannung auf die Gelenkkugel aufbringen zu können, ist zwischen der Gelenkkugel und dem das Gelenk verschließenden Deckel eine Druckschale eingesetzt, wobei sowohl der Deckel, als auch Druckschale auf wenigstens einer Seite teilweise die Oberflächenform einer Kugel mit jeweils unterschiedlichen Radien aufweisen.

Der Erfindung liegt das technische Problem zugrunde, ein Radialkugelgelenk zu entwickeln, das neben einfachem Aufbau, reibungsarm, dämpfend und toleranzausgleichend ist.

Gelöst wird diese Aufgabenstellung mit den Merkmalen des Patentanspruches 1 bzw. 2.
Ein erfindungsgemäßes Radialkugelgelenk für ein Kraftfahrzeug weist ein Gehäuse und einen Kugelzapfen auf, dessen Gelenkkugel allseitig beweglich in einer Lagerschale gelagert ist. Die Lagerschale kann ein- oder mehrteilig ausgeführt sein. Bei einer zweiteiligen Ausführung der Lagerschale ist zwischen der Oberschale und der Unterschale wenigstens ein Dämpfungselement in das Gehäuse eingesetzt, das die Gelenkkugel des Kugelzapfens radial progressiv vorspannt. Unter progressiver Vorspannung wird hierbei eine mit zunehmender radialer Belastung anwachsende Vorspannung verstanden.
Das Dämpfungselement weist eine verglichen mit der Lagerschale geringere Shorehärte auf, wobei die Lagerschale im unbelasteten Zustand des Gelenkes an der Gelenkkugel des Kugelzapfens nur punktuell oder linear anliegt.
Bei einer einteiligen Lagerschale ist es vorteilhaft, das Dämpfungselement unmittelbar in die Lagerschale einzusetzen.
Je nach Auswahl des entsprechenden Dämpfungsmittels kann eine bedarfsgerechte radiale Vorspannung und Elastizität der Lagerung erreicht werden. Es wurde somit eine Art Baukastensystem geschaffen, das es gestattet, die Kennwerte einer Kugelgelenklagerung beliebig zu wählen. Um andere Kennwerte in einem Gelenktyp zu erreichen, muß demnach lediglich ein Dämpfungsmittel mit höherer oder niederer Shorehärte eingesetzt werden. Ein derartiges Radialkugelgelenk ist durch gute Dämpfungseigenschaften charakterisiert. Das Fahrverhalten eines Kraftfahrzeuges kann somit durch den Einsatz erfindungsgemäßer Radialkugelgelenke entscheidend beeinflußt werden.
Durch die punktuelle oder lineare Anlage der Lagerschale wird zudem erreicht, daß ein geringes Losbrechmoment innerhalb eines erfindungsgemäßen Radialkugelgelenkes und somit insgesamt sehr niedrige Reibungswerte bei normaler Belastung gewährleistet werden können.
Die Lagerschale kann mit Rippen an ihrer äußeren Berührungsfläche mit dem Gehäuse ausgestattet sein. Ebenso sind in an sich bekannter Weise zusätzlich Schmiermittelausnehmungen auf der Innen- und / oder Außenoberfläche der Lagerschale realisierbar.

Weitere Ausgestaltungen der Erfindung sind Gegenstand der Unteransprüche.
So kann die punktuelle oder lineare Anlage der Lagerschale an der Gelenkkugel des Kugelgelenkes dadurch erreicht werden, daß der Radius der Gelenkkugel kleiner gewählt wird, als der Radius der sphärischen Innenmantelfläche der Lagerschale. Die Lagerschale sollte dabei wenigstens einen in Umfangsrichtung gesehen begrenzten, wulstförmigen Bereich aufweisen, der unmittelbar an der Gelenkkugel anliegt.

Der Spalt kann jedoch auch dadurch erreicht werden, daß entweder die Kugel oder die Innengeometrie der Lagerschale eine zumindest bereichsweise Abweichung von einer Kugelgeometrie aufweist. So ist erfindungsgemäß an eine beispielsweise ovale Form gedacht.

In weiterer Ausgestaltung des Erfindungsgedankens kann das Dämpfungselement ein Gummiring mit definierter elastischer Kennung sein. Dieses Dämpfungselement kann vorteilhafter Weise eine ballige Kontur aufweisen. Selbstverständlich liegen auch andere Querschnittsformen, wie beispielsweise ein Ringquerschnitt, ein annähernd dreieckiger, oder quadratischer Querschnitt im Bereich des Erfindungsgedankens.

Ein Ausführungsbeispiel der Erfindung wird nachstehend unter Bezugnahme auf die Zeichnung näher erläutert. Es zeigen:
- Figur 1:: ein erfindungsgemäßes Radialkugelgelenk im unbelasteten Zustand im Schnitt.
- Figur 2:: ein weiteres erfindungsgemäßes Radialkugelgelenk im unbelasteten Zustand im Schnitt.

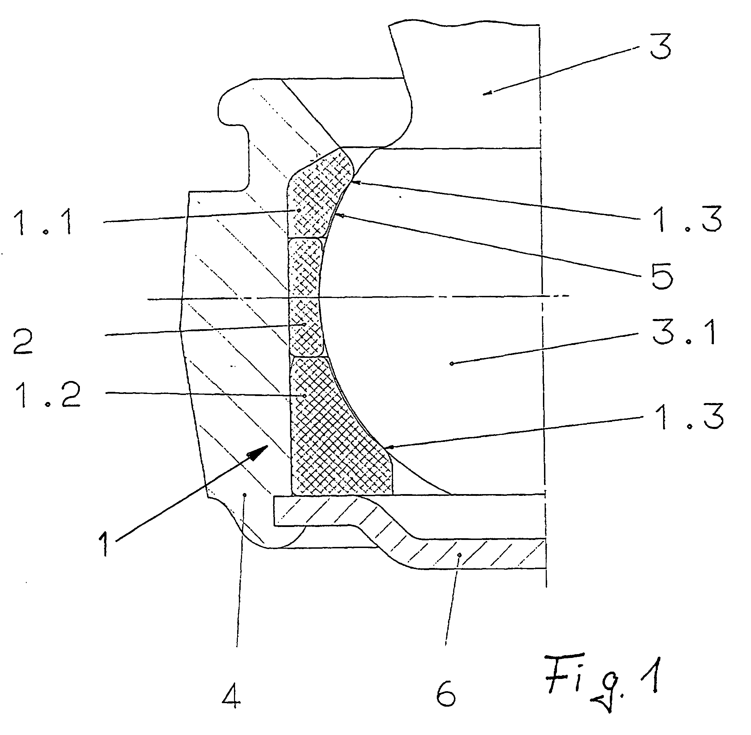

Ein bevorzugtes erfindungsgemäßes Radialkugelgelenk für ein Kraftfahrzeug, wie es in der Figur 1 beispielhaft dargestellt ist, weist ein Gehäuse (4) und einen Kugelzapfen (3) auf, dessen Gelenkkugel (3.1) allseitig beweglich in einer Lagerschale (1) gelagert ist. Die Lagerschale ist in dem dargestellten Ausführungsbeispiel zweiteilig ausgeführt. Sie besteht aus einer Oberschale (1.1) und einer Unterschale (1.2). Dabei ist zwischen der Oberschale und der Unterschale ein Dämpfungselement (2) in das Gehäuse (4) eingesetzt, das die Gelenkkugel (3.1) des Kugelzapfens (3) radial progressiv vorspannt. Dieses Dämpfungselement weist eine verglichen mit der Lagerschale geringere Shorehärte auf, wobei die Lagerschale an der Gelenkkugel des Kugelzapfens nur punktuell oder linear anliegt.
Durch die punktuelle oder lineare Anlage der Lagerschale wird erreicht, daß ein geringes Reib- und Losbrechmoment innerhalb eines erfindungsgemäßen Radialkugelgelenkes und somit insgesamt sehr niedrige Reibungswerte bei normaler Belastung gewährleistet werden können.
Die punktuelle oder lineare Anlage der Lagerschale an der Gelenkkugel des Kugelgelenkes wird vorliegend dadurch erreicht, daß der Radius der Gelenkkugel (3.1) kleiner gewählt wird, als der Radius der sphärischen Innenmantelfläche der Lagerschale. Die Ober- und die Unterschale weisen jedoch jeweils einen wulstförmigen Bereich (1.3) auf, der unmittelbar an der Gelenkkugel anliegt. Dadurch verbleibt bei dem unbelasteten Gelenk zwischen Gelenkkugel und Lagerschale ein Hohlraum (5). Dieser weist erfindungsgemäß eine Spaltbreite zwischen 0,001 mm und 1 mm, vorzugsweise jedoch maximal 0,5 mm auf. Dieser Spaltbreitenbereich hat sich als besonders vorteilhaft erwiesen. Dabei nimmt der Spalt beginnend am wulstförmigen Bereich (1.3) in Richtung des Äquators zu.
Der Spalt kann jedoch auch dadurch erreicht werden, daß entweder die Kugel (3.1) oder die Innengeometrie der Lagerschale (1) eine zumindest bereichsweise Abweichung von einer Kugelgeometrie aufweist.
Die in ihren Abmessungen geringe, durch den wulstförmigen Bereich gebildete Anlagefläche erbringt sehr niedrige Reibungswerte eines erfindungsgemäßen Radialkugelgelenkes im unbelasteten Zustand, das heißt, ein derartiges Gelenk weist ein äußerst niedriges Reib- beziehungsweise Losbrechmoment auf. Das Dämpfungselement ist bei der gezeigten Ausführung ein einfacher Gummiring mit definierter elastischer Kennung, dessen in das Gehäuse eingesetzter Außenumfang zylindrisch ist und dessen Anlagefläche an der Gelenkkugel eine dem Gelenkkugelradius entgegengesetzte Wölbung aufweist, sodaß hierdurch eine Vorspannung auf die Gelenkkugel ausgeübt wird. In der Darstellung ist die der Gelenkkugel entgegengesetzte Wölbung deshalb nicht erkennbar, da die Gelenkkugel (3.1) in die Lagerschale eingesetzt ist und somit der Gummiring bereits seine Vorspannfunktion auf die Gelenkkugel ausübt. Das Gelenk wird einseitig mit einem Deckel (6) verschlossen. Auf der dem Deckel gegenüberliegenden Seite wird ein in der Figur 1 nicht dargestellter Dichtungsbalg montiert.

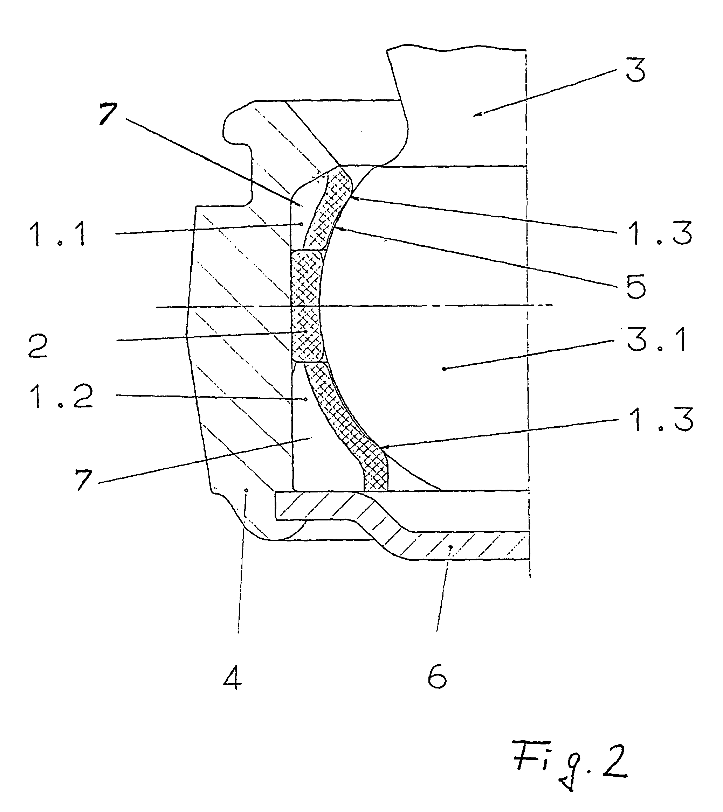

Die Figur 2 zeigt eine grundsätzlich mit der in Figur 1 baugleiche Ausführung eines erfindungsgemäßen Kugelgelenkes. Der einzige Unterschied besteht vorliegend darin, daß die zweiteilige Lagerschale (1.1, 1.2) an ihrer äußeren Berührungsfläche mit dem Gahäuse (4) bereichsweise mit Rippen (7) ausgestattet ist.

### Bezugszeichenliste:

- 1: Lagerschale
- 1.1: Oberschale
- 1.2: Unterschale
- 1.3: Wulst
- 2: Dämpfungselement
- 3: Kugelzapfen
- 3.1: Gelenkkugel
- 4: Gehäuse
- 5: Hohlraum
- 6: Deckel
- 7: Rippe

## Patentansprüche

1. Radialkugelgelenk für ein Kraftfahrzeug mit einem Gehäuse (4) und einem Kugelzapfen (3), dessen Gelenkkugel (3.1) allseitig beweglich in einer Lagerschale (1) gelagert ist, wobei wenigstens ein Dämpfungselement (2) die Gelenkkugel (3.1) des Kugelzapfens (3) radial progressiv vorspannt und dieses Dämpfungselement (2) eine verglichen mit der Lagerschale (1) geringere Shorehärte aufweist,
**dadurch gekennzeichnet, dass**
die Lagerschale (1) zweiteilig ausgeführt ist und zwischen einer Oberschale (1.1) und einer Unterschale (1.2) das wenigstens eine Dämpfungselement (2) in das Gehäuse (4) eingesetzt ist und die Lagerschale (1) im unbelasteten Zustand des Gelenkes an der Gelenkkugel (3.1) des Kugelzapfens (3) nur punktuell oder linear anliegt.

2. Radialkugelgelenk für ein Kraftfahrzeug mit einem Gehäuse (4) und einem Kugelzapfen (3), dessen Gelenkkugel (3.1) allseitig beweglich in einer Lagerschale (1) gelagert ist, wobei die Lagerschale (1) einteilig ausgeführt ist und wenigstens ein Dämpfungselement (2) die Gelenkkugel (3.1) des Kugelzapfens (3) radial progressiv vorspannt, dieses Dämpfungselement (2) in die Lagerschale (1) eingesetzt ist und eine verglichen mit der Lagerschale (1) geringere Shorehärte aufweist,
**dadurch gekennzeichnet, dass**
die Lagerschale (1) im unbelasteten Zustand des Gelenkes an der Gelenkkugel (3.1) des Kugelzapfens (3) nur punktuell oder linear anliegt.

3. Radialkugelgelenk für ein Kraftfahrzeug nach einem der Ansprüche 1 oder 2,
**dadurch gekennzeichnet, daß**
der Radius der Gelenkkugel (3.1) kleiner ist, als der Radius der sphärischen Innenmantelfläche der Lagerschale (1) und die Lagerschale wenigstens einen begrenzten, wulstförmigen Bereich (1.3) aufweist, dessen Radius mit dem Radius der Gelenkkugel (3.1) annähernd übereinstimmt.

4. Radialkugelgelenk für ein Kraftfahrzeug nach einem oder mehreren der vorhergehenden Ansprüche,
**dadurch gekennzeichnet, daß**
das Dämpfungselement (2) ein Gummiring mit definierter elastischer Kennung ist.

## Claims

1. Radial ball-and-socket joint for a motor vehicle, comprising a housing (4) and a ball pivot (3), the joint ball (3.1) of which is mounted movably in all directions in a bearing shell (1), at least one damping element (2) radially progressively pretensioning the joint ball (3.1) of the ball pivot (3), and said damping element (2) having a lower Shore hardness than the bearing shell (1),
**characterised in that**
the bearing shell (1) is configured in two parts and, between an upper shell (1.1) and a lower shell (1.2), the at least one damping element (2) is inserted into the housing (4) and, in the unloaded state of the joint, the bearing shell (1) is only in punctiform or linear contact with the joint ball (3.1) of the ball pivot (3).

2. Radial ball-and-socket joint for a motor vehicle, comprising a housing (4) and a ball pivot (3), the joint ball (3.1) of which is mounted movably in all directions in a bearing shell (1), the bearing shell (1) being configured in one part and at least one damping element (2) radially progressively pretensioning the joint ball (3.1) of the ball pivot (3), said damping element (2) being inserted into the bearing shell (1) and having a lower Shore hardness than the bearing shell (1),
**characterised in that**,
in the unloaded state of the joint, the bearing shell (1) is only in punctiform or linear contact with the joint ball (3.1) of the ball pivot (3).

3. Radial ball-and-socket joint for a motor vehicle according to either claim 1 or claim 2,
**characterised in that**
the radius of the joint ball (3.1) is smaller than the radius of the spherical inner circumferential surface of the bearing shell (1), and the bearing shell has at least one limited, bead-like region (1.3) having a radius approximately equal to the radius of the joint ball (3.1).

4. Radial ball-and-socket joint for a motor vehicle according to one or more of the preceding claims,
**characterised in that**
the damping element (2) is a rubber ring having a defined resilient characteristic.

## Revendications

1. Joint sphérique radial pour un véhicule automobile avec un boîtier (4) et un pivot sphérique (3), dont la rotule (3.1) est montée de manière à pouvoir se déplacer de tous côtés dans une coquille de coussinet (1), au moins un élément d'amortissement (2) soumettant à une précontrainte radiale progressive la rotule (3.1) du pivot sphérique (3) et présentant une dureté Shore inférieure à celle de la coquille de coussinet (1),
**caractérisé en ce que**
la coquille de coussinet (1) est réalisée en deux parties, le au moins un élément d'amortissement (2) est inséré dans le boîtier (4) entre une coquille supérieure (1.1) et une coquille inférieure (1.2) et la coquille de coussinet (1), à l'état non sollicité du joint articulé, ne s'appuie que ponctuellement ou linéairement sur la rotule (3.1) du pivot sphérique (3).

2. Joint sphérique radial pour un véhicule automobile avec un boîtier (4) et un pivot sphérique (3), dont la rotule (3.1) est montée de manière à pouvoir se déplacer de tous côtés dans une coquille de coussinet (1), la coquille de coussinet (1) étant réalisée d'un tenant et au moins un élément d'amortissement (2) soumettant à une précontrainte radiale progressive la rotule (3.1) du pivot sphérique (3), cet élément d'amortissement (2) étant inséré dans la coquille de coussinet (1) et présentant une dureté
Shore inférieure à celle de la coquille de coussinet (1),
**caractérisé en ce que**
la coquille de coussinet (1), à l'état non sollicité du joint articulé, ne s'appuie que ponctuellement ou linéairement sur la rotule (3.1) du pivot sphérique (3).

3. Joint sphérique radial pour un véhicule automobile selon l'une quelconque des revendications 1 ou 2,
**caractérisé en ce que**
le rayon de la rotule (3.1) est plus petit que le rayon de la surface enveloppe interne sphérique de la coquille de coussinet (1) et la coquille de coussinet présente au moins une zone en forme de bourrelet limitée (1.3) dont le rayon coïncide sensiblement avec le rayon de la rotule (3.1).

4. Joint sphérique radial pour un véhicule automobile selon une ou plusieurs des revendications précédentes,
**caractérisé en ce que**
l'élément d'amortissement (2) est une bague de caoutchouc de caractéristique élastique définie.
